(19) Europäisches Patentamt
European Patent Office
Office européen des brevets

(11) **EP 2 068 251 A2**

(12) **EUROPEAN PATENT APPLICATION**

(43) Date of publication:
**10.06.2009 Bulletin 2009/24**

(51) Int Cl.:
***G06F 17/21*** *(2006.01)*

(21) Application number: **08018296.7**

(22) Date of filing: **20.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.10.2007 IL 18692407**

(71) Applicant: **Deutsche Telekom AG**
**53113 Bonn (DE)**

(72) Inventors:
• **Meyer, Joachim**
  **Omer 84965 (IL)**
• **Ben-Asher, Noam**
  **32970 Haifa (IL)**
• **Becker, Radi**
  **44344 Kfar Saba (IL)**

(74) Representative: **Flaccus, Rolf-Dieter**
**Flaccus · Müller-Wolff**
**Patentanwälte**
**Bussardweg 10**
**50389 Wesseling (DE)**

(54) **A method of content adaptation for electronic displays**

(57) The invention is a method for using a computer system to automatically generate dynamically changing, flexible, and individually customized layouts of information on a display area comprising a screen or a page without involvement of a human. The method is guided by an extensive set of rules that represent the relationships between a limited set of input parameters related to properties of the devices making up the system, user preferences, and the content attributes of the information.

**EP 2 068 251 A2**

Printed by Jouve, 75001 PARIS (FR)

## Description

### Field of the Invention

The invention is related to the field of publishing. Specifically the invention relates to an automated method of content adaptation and display personalization, which is controlled and guided by human preferences, as well as content attributes and display platform capabilities.

### Background of the Invention

Information is increasingly provided through electronic media, such as websites or mobile platforms. In printed media the layout, once printed, is static. When reviewing printed media and existing news websites, the human editor's work is noticeable. He or she classifies the information items and determines their importance. In accordance with these occasionally subjective parameters a display area is allocated for each item. In the case of electronic media, presenting content in a dynamic, automatic and personalized way, while still enabling user involvement, interaction and control of the process, is a major challenge.

In electronic information platforms the life time of content is not dictated by the paper issue date, as in printed media; instead, it can vary greatly. In most news sites each information item caption includes not only the publishing date but the time as well. In some news sites there is an area dedicated for breaking news. Therefore, the traditional static attribute of information item location in printed media (front page, in a section, or on the back page) turns to be a dynamic one in the life cycle of digital information items.

An electronic information layout should have the ability to change dynamically and adjust the display template according to content attributes such as importance and publication time, in addition to user preferences. Font size and font face and other typographic factors are well known design tools and visual indicators of content properties like importance. They can be tuned in form and function to optimize content and context (Ihlström, C., Åkesson, M. & Nordqvist, S. (2004); From Print to Web to e-paper - the challenge of designing the e-newspaper; In Proceedings of ICCC 8th International Conference on Electronic Publishing, ELPUB 2004, Brasilia, pp. 249-260). In electronic news platforms these simple physical attributes of display can be changed dynamically and affect the reader. Dynamic layout could enhance the capabilities of the electronic newspaper and the experience of reading when delivering content in the appropriate layout, using new and well known design tools.

The ambition to reduce human involvement and to automate layout generation has great importance when considering the massive amounts of content created and consumed on a daily basis. These content items are candidates for publication (broadcasting) to an ever growing population of readers, which can use different types of devices to access content. These devices will have a vast range of characteristics and capabilities (e.g., their screen size, color definition, refresh rate and more). In addition, readers have different preferences, areas of interest and use the system under different conditions. Customizing displays, while delivering an optimized result for a large number of customers, is a task almost beyond human capacities.

Typical examples of prior art attempts to deal with aspects of these problems can be found in the following publications:

- US 5,895,477 describes an interactive advisory system for layout generation. The user adds content to a composition and the system arranges the new and existing content.

- US 5,956,738 describes an automatic method for layout of an article in columns in an article space. The method uses random numbers to generate column shape, column layout order, and article layout order. A plurality of layouts is generated and an evaluation is carried out to determine the optimal layout result for the article space. The layout method does not take into consideration reader preferences.

- WO/2003/02712 and WO/2003/02761 describe methods for automatic layout generation of a plurality of elements on a computer or display screens used as a user interface. The elements are selected from a limited predefined collection and the methods are not focused on the problem of content, i.e. information presentation, per se.

Neither these nor any other publication from the related prior art teach a method for content adaptation and display personalization, which is controlled and guided by human preferences, as well as content attributes and display platform capabilities and is capable of dealing with a flow of information, e.g. a virtually infinite number of news items.

It is therefore a purpose of the present invention to provide a method of content adaptation and display personalization, which is controlled and guided by human preferences, as well as content attributes and display platform capabilities.

It is another purpose of the present invention to provide a method of content adaptation and display personalization, which is capable of dealing with a flow of information.

It is another purpose of the invention to provide a method of content adaptation and display personalization, which provides these capabilities without any involvement of a human operator by implementing them with a computerized algorithm.

It is a further purpose of the invention to provide a method of content adaptation and display personalization, which will have an important role in the development of electronic newspapers, as well as in other media publishing fields.

Further purposes and advantages of this invention will appear as the description proceeds.

## Summary of the Invention

The invention is a method for automatically generating with a computer system dynamically changing, flexible, and individually customized layouts of information on a display area comprising a screen or a page without involvement of a human. The method is guided by an extensive set of rules that represent the relationships between a limited set of input parameters related to properties of the devices making up the system, user preferences, and the content attributes of the information.

An embodiment of the method of the invention comprises the steps of:

a. providing to the computer system the limited set of input parameters; and

b. providing to the computer system a layered structure of operating instructions comprised of three physical layers each of which provides a different functionality and one logic layer, which guides the execution of all layers, wherein:

- the execution of the physical layers is synchronized sequentially, wherein the output of a higher physical layer provides the input to the one beneath it and the logic layer constantly provides the currently active physical layer with the required data and rules that represent the internal logic of content adaptation;
- the first physical layer generates an empty template for content by recursively splitting the display area into smaller sibling areas according to the set of input parameters;
- the second physical applies different merging strategies on areas within the generated template according to the set of input parameters that can include content attributes;
- the third layer integrates the content into the generated template by negotiating between the template and the content, thereby optimizing the presentation of the content according to the number of items and their importance; and
- the logic layer comprises the logic rules that represent relations between objects in the display and the set of input parameters;

thereby enabling the computer system to perform content adaptation and display personalization by generating an infinite number of templates that can be adapted, according to the set of input parameters to any display dimensions and populating the templates with the content.

In above embodiment of the invention the stopping rule on which the recursive splits in the first layer operates is the minimal dimensions of an item or area in the target template and the third layer correlates between a content item's importance according to the profile/preferences of the user and the perceived area of the area on the screen or page.

The logic rules of the logic layer comprise physical relations between the objects in the display as well as physical representations of abstract display concepts.

According to the method of the invention, by using the two first layers, it is possible to generate a practically infinite number of templates by changing the input parameters. In the third layer, there is a process which determines the internal structure of each area in the template, according to the rules in the logic layer.

In an embodiment of the invention, the limited set of input parameters comprises:

- template parameters;
- merging parameters; and
- content parameters.

In an embodiment of the method of the invention, one sibling area does not participate in the next iteration and the others do in the splitting method used in order to further divide the sibling areas after the initial split.

In an embodiment of the method of the invention, only one sibling area participates in the next iteration and the others do not participate in any of the following iterations in the splitting method used in order to further divide the sibling areas after the initial split.

In an embodiment of the method of the invention, the calculated density is used in the logic layer to determine whether an area will include a heading only, a heading and body text or a heading, a picture and body text.

In an embodiment of the method of the invention, the logic layer comprises a set of rules that allow the user to have control over the amount of personalization of the display.

All the above and other characteristics and advantages of the invention will be further understood through the following illustrative and non-limitative description of preferred embodiments thereof, with reference to the appended drawings.

**Brief Description of the Drawings**

- Fig. 1 presents a schematic view of the algorithm layers;
- Fig. 2 shows a parent area split into four sibling areas according to the division parameters;
- Fig. 3 shows the binary heap structure generated by the splits performed by the first layer;
- Fig. 4 symbolically shows two horizontal merges;
- Fig. 5 shows the results of the two actions of merging along the X axis shown in Fig. 4;
- Fig. 6 symbolically shows two vertical merges;
- Fig. 7 shows the results of the two actions of merging along the Y axis shown in Fig. 6;
- Fig. 8 shows the binary heap structure after node merge in the second layer;
- Fig. 9 is a hierarchical structure showing the content presented in a manner similar to a printed newspaper or news web site;
- Fig. 10 shows graphs of the area index vs. the calculated density for two different minimal areas;
- Fig. 11 shows graphs of the area index vs. the calculated density for two different division ratios;

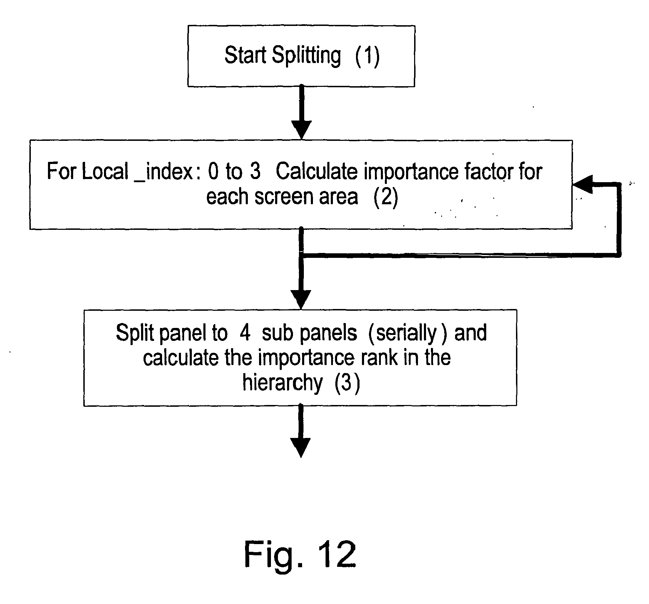

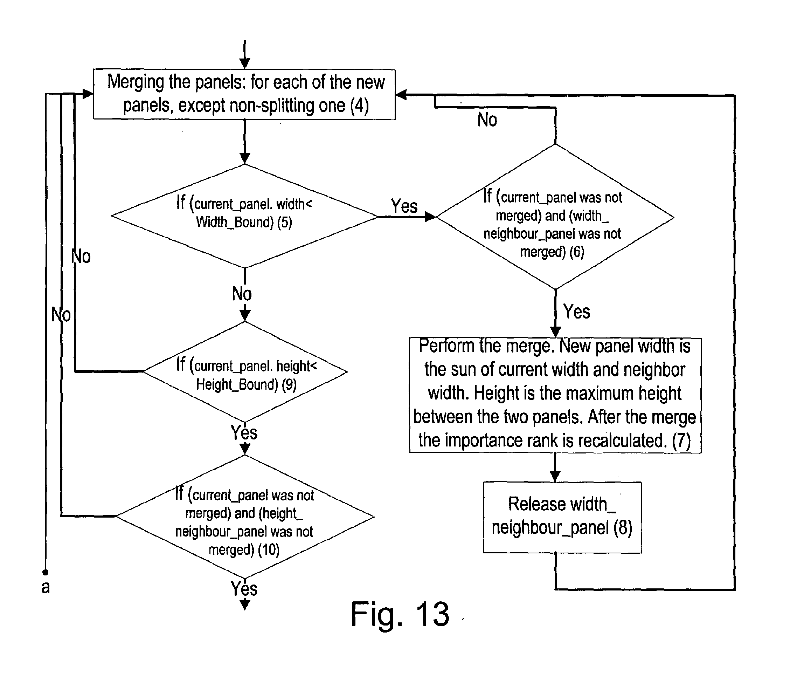

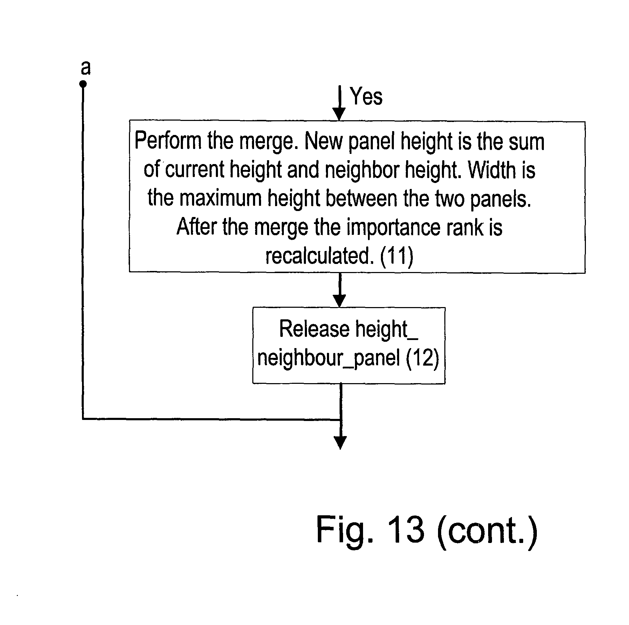

- Fig. 12 to Fig. 14 are flow charts that describe the splitting and merging processes that occur in the first and second layers of the algorithm;
- Fig. 15 is a flow chart, which describes the preprocessing of content before populating the panels of the template;
- Fig. 16 is a flow chart showing the main processes involved in populating the panels of the template with information items and how the internal structure of each panel is determined; and
- Fig. 17 demonstrates the way in which area elements and content can be manipulated using the calculated density.

**Detailed Description of Preferred Embodiments**

The invention is a method of content adaptation for electronic and other types of displays based on an algorithmic approach. The content adaptation process of the invention for a device like an electronic newspaper allows adaptation without any involvement of a human operator. This process is guided by human centered rules of adaptation, leaving the actual process as automated as possible. In order to achieve this goal, the invention provides a computerized algorithm for performing content adaptation and display personalization, which is controlled and guided by human preferences, as well as content attributes and display platform capabilities. The algorithm includes a four-layered structure which provides flexibility and extensibility. It uses a limited set of parameters and is capable of generating an infinite number of templates, suitable for any display dimensions. Although the invention is described herein in relation to electronic newspapers, this is done only to illustrate the main features of the algorithmic approach and is not intended to limit the applications in which the invention can be used. It can be used for displaying content from a wide range of publishing fields, including pages printed on paper but particularly on a wide variety of electronic displays, from mobile phones to large electronic billboards.

The main objective of the content adaptation algorithm of the invention is to enable dynamic and automatic content adaptation to a wide range of displays. The algorithm is capable of handling textual (titles and paragraphs) and multimedia content (such as pictures and movies), while other types of content can be easily integrated by applying the flexible existing concepts.

The algorithmic approach includes two separate methodological solutions to the challenges in content adaptation. The first is a recursive construction of complex displays. The second methodology involves generalizing dynamic rules which describe mutual relations between display elements. By combining the user dependent inputs with content attributes and device dependent properties, the algorithm is capable of optimizing content display. It includes a logic simplifying layer, by which the user does not have to be acquainted with all the algorithm parameters and courses of action.

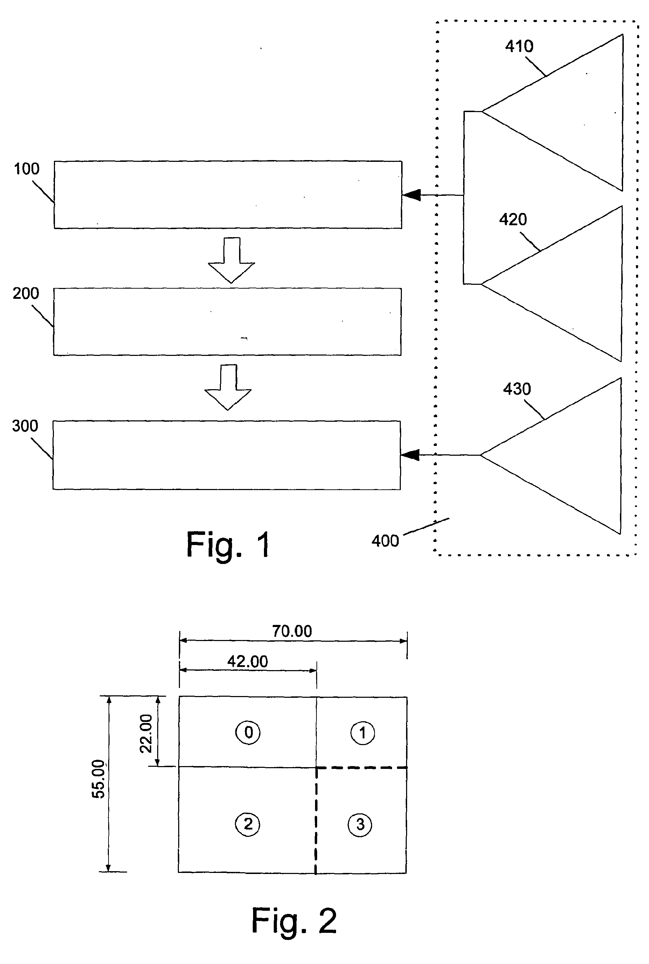

The algorithm structure of the invention includes three physical layers and one logical layer. Each layer provides different functionality. The output of a higher level provides the input of the lower one, while the logic layer guides the execution of all layers. Therefore the execution of the layers is synchronized sequentially; the logic layer constantly provides the active layer with the required data. Fig. 1 presents a schematic view of the algorithm layers.

In the first layer 100, the recursive grid generation layer, the algorithm constructs a grid, which stands for a page template. The aim of this layer is to generate recursively an empty template for content according to a limited set of parameters. The stopping rule on which the recursive splits operate is the desired minimal dimensions of an item or area in the final, generated template.

The algorithm does not implement a "look ahead" strategy; in the last split it creates areas that are smaller than the minimum item in one or two of their dimensions. Therefore the second layer 200 performs a "bottom up inclination". This process applies different merging strategies according to the input parameters on areas within the template.

The third layer 300 integrates the content into the generated template. Content properties are derived from user preferences (profile). In the third layer there is a negotiation between the template and the content with the aim to optimize the presentation of the content according to the number of items and their importance. It correlates between a content item's importance according to the user profile and the perceived importance of the area on the screen.

The vertical logic layer 400 binds the algorithm's inputs with each of the active layers. It includes the logic rules that represent relations between objects in the display. These are physical relations, such as correlation between font size and screen dimensions, as well as physical representations of abstract display concepts, such as density. The content of logic layer 400 is symbolically shown in Fig. 1 as device properties 410, user preferences 420, and content attributes 430.

Using the two first layers, it is possible to generate a practically infinite number of templates by changing the input parameters. A fixed set of parameters allows the same template to be recreated when needed. Changing the display area and the minimal item size by the same ratio will result in the same template, but in a different scale. Moreover, grouping the logic rules that guide the process in a separate layer allows an incremental approach in development. It is possible to add and modify the logic layer independently from the other layers, while changes in the logic layer are transparent to the other layers and affect them without the need for special adjustments.

The algorithm of the invention adapts content in a generic manner. Therefore the initial set of parameters provided externally is as limited as possible. The values of these parameters can be retrieved from the device profile, user profile and even location of use. In this phase there are three main types of parameters:

- Template Parameters;
- Merging Parameters; and
- Content Parameters.

Template parameters comprise sets of parameters that initiate the process of dynamic content adaptation by the algorithm. They are required in the first layer and are needed for the generation of a preliminary grid.

The first, i.e. template, set of parameters includes height and width dimensions of the display area. These values are derived from the physical properties of the device and can be measured in pixels or metric units.

The second set, i.e. merging set, of parameters is the minimal height and width of a division area, which stands for the smallest usable area on the display. This limitation can be derived from user interaction style (touch screen, stylus pen or keypad), user preference or needs (font and picture size) or content attributes (advertisement size, title size, etc.). For example, when using a touch screen, there are limitations on the height and width of navigation (clickable) objects. A short sighted person will prefer larger objects on the screen. A content oriented limitation for these parameters is the smallest area size dedicated to a single article, advertisement, information alert or picture.

Within each of the iterations, the algorithm splits an area into separate sibling areas. Any number of sibling areas can be generated by executing a horizontal split followed by a vertical split. For demonstration reasons only the parent area will be split into four sibling areas in the examples herein. Using the division parameters set, the ratio of the height and width of the sibling top left area is defined relative to the parent area. By setting the dimensions of one sibling area, the dimensions of all the other three sibling areas have been set.

Fig. 2 shows a parent area (width: 70mm, height: 55.00mm) that was split with division parameters: width = 0.6, height = 0.4. These dimensions are applied on sibling area 0, and as a result the dimensions of areas 1-3 are determined as well.

The algorithm delivers the means to control which sibling area will participate in the next splitting iteration. Before the recursive split of a sibling area starts [but after the split shown in Fig. 2], it is possible to choose from a large number of splitting methods in order to further divide the sibling areas. Examples of two of the possible splitting methods will now be described. In the first method one area will not participate in the next iteration and the others will. In the second method the algorithm is provided with the index of the only area that will participate in the next iteration and the other three will not participate in any of the following iterations. The index of that area (non split or the split one only) is another parameter ranging from 0 to 3. Its initial value is set before the first split. In addition there are several policies that can be adopted for determining this parameter:

- A fixed value
- Rotating value policy, which changes the initial non-splitting area number in the following iteration. In the currently used implementation of the invention the non-splitting area changes in an increasing serial manner that cycle from the last to the first.
- Dynamic assignment of the values that allow clusters of non splitting areas in a desired location e.g. at the center of the screen.

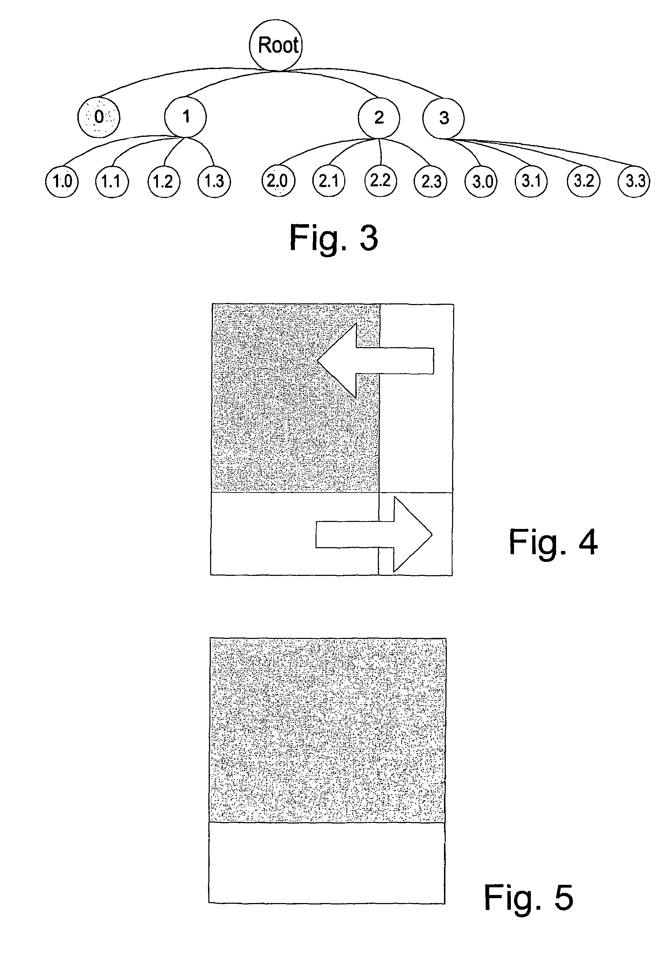

The case where only one area does not participate in the next iteration is shown in Fig. 3, which shows the binary heap structure generated by the splits performed by the first layer execution using the fixed value policy. In this example, the non splitting area index is 0.

The merging layer 200 uses the minimal height and width as inputs for the merging process. The dimensions of each area are compared to the dimensions that were set for the minimal split area in the template parameters. In this step the algorithm compares those values serially, first the height and then the width. If the width of the compared area is smaller than the width of the minimal area, the current area will be merged with the adjacent area on the X axis. Fig. 4 symbolically shows two horizontal merges. In the upper one, sibling area 1 is merged into area 0 and in the lower one area 2 merges into area 3. Fig. 5 shows the results of the two actions of merging along the X axis shown in Fig. 4.

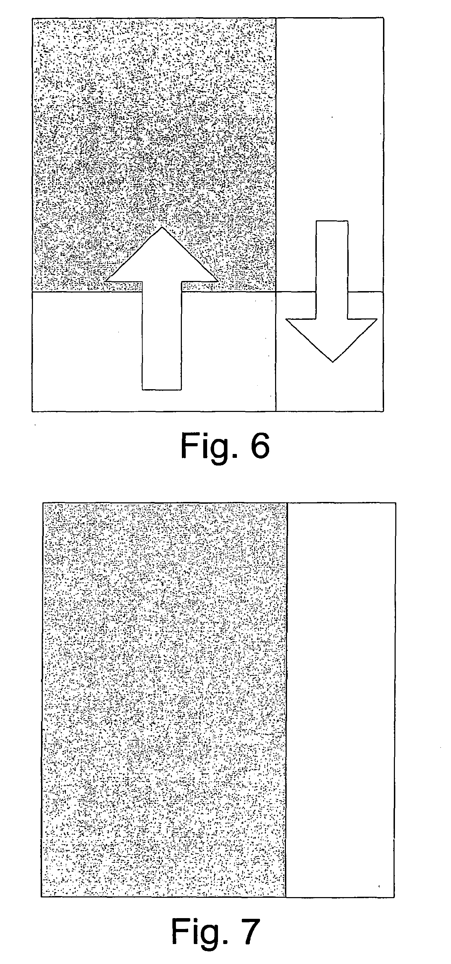

After checking the width, the algorithm performs the same process for the height. If needed, it will perform a merge along the Y axis as seen in Fig. 6 and Fig. 7.

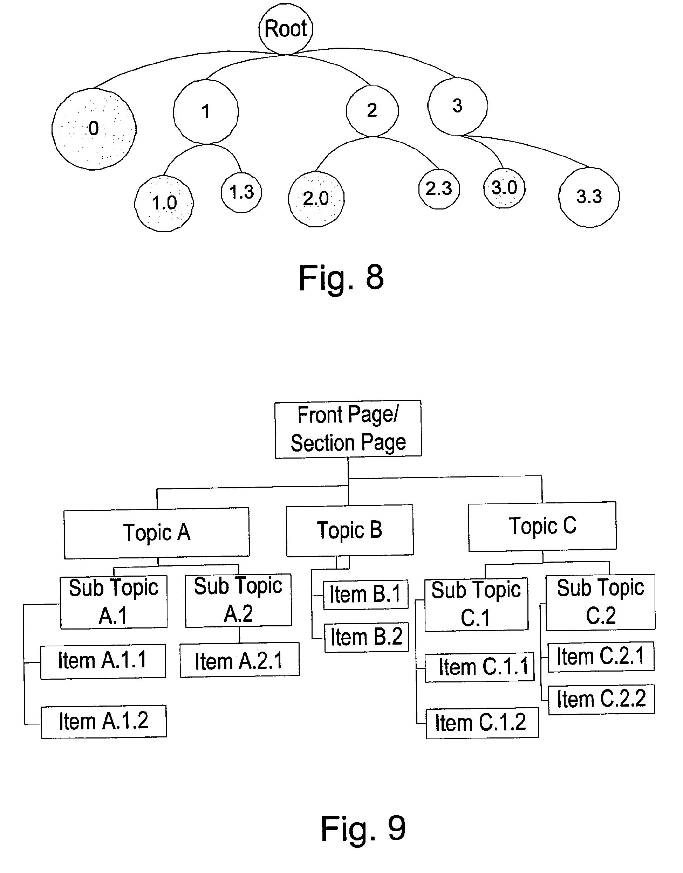

The result of the merging process in the second layer on a binary heap structure generated in the first layer is shown in Fig. 8. In Fig. 8, the white circles are areas, the grey circles indicate the undivided areas, and the size of the circle is an indication of the visually perceived importance of the area.

The content delivers the third set of parameters, i.e. the content parameters. These parameters change according to the structure of the content and the importance of the items. Therefore the third layer 300 integrates content and grid features, creating a suitable template for presentation. In the third layer there is a process which determines the internal structure of each area in the template, according to the rules in the logic layer. An area can be constructed from any combination of objects (heading, body text and image) that construct an information item.

The simplest situation exists when the number of content items is equal to the number of areas in the gird. However, the number of items can be smaller than the number of allocated areas in the template. In this case the algorithm can submit a request for additional content or can adjust the display to have fewer areas. The challenge is a situation in which there are more content items than areas in the template. This situation requires a more thorough revision of the template structure and the amount of aggregated content or some prioritization of items and the selective display of the items with the highest priorities.

Other aspects of content parameters refer to the size or the quantity of information in the information item itself, e.g. whether the information item includes one or more pictures, the size of the title, and the body text (e.g. the number of letters and the area occupied by the text).

Fig. 9 is a hierarchical structure showing the content presented in a manner similar to a printed newspaper or news web site. The importance of the content is represented by the size of the topic or the item. The hierarchical structure of Fig. 9 needs to be adapted to the binary heap presentation of a grid generated following the first and second layers shown in Fig. 8. The algorithm is required to adapt and overcome the differences between the two tree representations.

In the third layer 300 the algorithm calculates the importance of an area in the grid in the following manner. First it orders the areas according to their size (height x width) in a descending order. Areas with the same size are ordered according to their location, with top left coming first, then top right, followed by bottom left and bottom right. This sorting is guided by the element location in the hierarchical structure that represents the template.

The logic layer 400 represents an extensible set of rules that guide the execution of the algorithm through the three other layers. Content attributes 430, display properties 410, and user preferences 420 affect each other and interact with each other when using the electronic newspaper.

The logic layer models these interactions into a set of simple rules to generate an appealing user experience. Some of the main factors that influence the user's experience are the density, the font size, and the level of personalization.

Calculated density is an example for a parameter that is used by the logic layer. Calculated density is the ratio between the minimal area size and the entire display size.

$$CalculatedDensity = \frac{Height_{(MinimalPanel)} X Width_{(MinimalPanel)}}{Height_{(Display)} X Width_{(Display)}}$$

As described above the algorithm performs the merges such that, if the width or the height of an area is smaller than the minimal area width or height, this area is merged to an adjacent area. It is possible that after the merge there will still be areas with smaller height or width than the minimal area. High calculated density value indicates a crowded template, while low calculated density indicates a template with few areas.

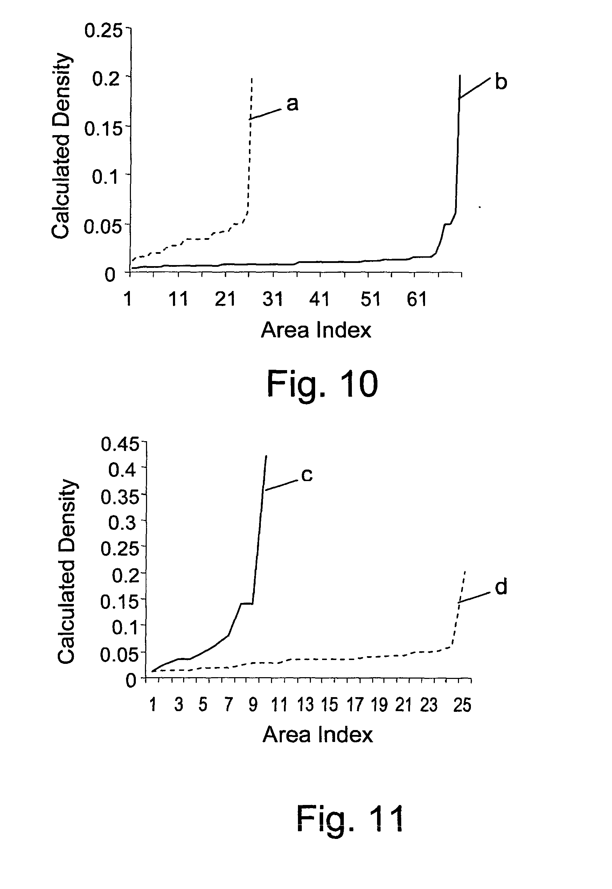

Fig. 10 shows graphs of the area index, i.e. the number of areas on the display vs. the ratio between areas and the entire display area, i.e. the calculated density for a display having Height=500 pixel, Width=600 pixel, and X division Ratio = Y division Ratio = 0.45. Curve a shows the results for a small minimal area (Height=50 pixel, Width=50 pixel) and curve b is for a large minimal area (Height=100 pixel, Width=100 pixel).

In addition to providing information regarding the template layout, calculated density affects the internal structure of an area. When areas are populated with content, they can each contain several elements because an information item can have a title, body text and a picture. The minimal requirement is that an area will include at least one element, a title, for instance. The types of elements included within an area and their actual dimensions are functions of the area size, as well as the calculated density.

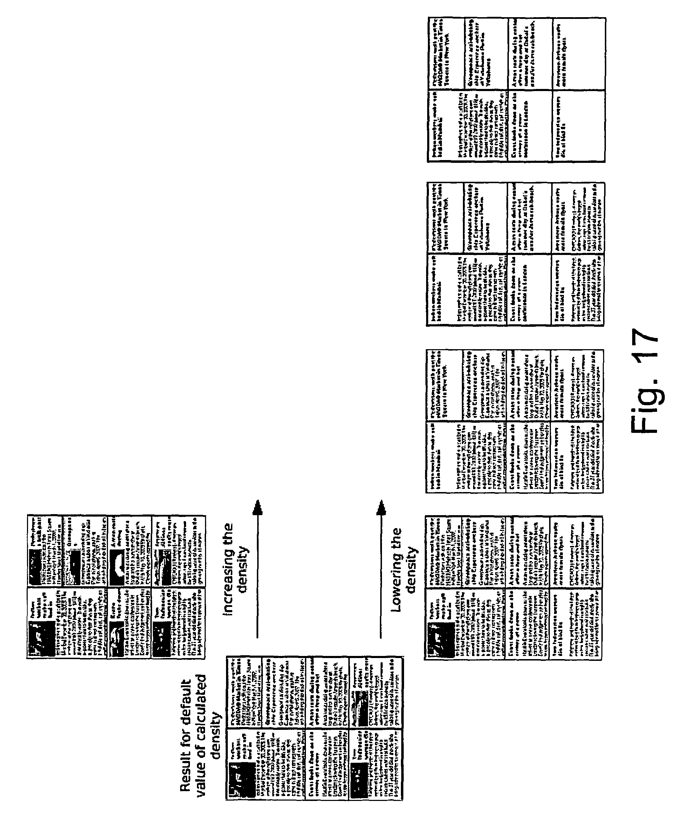

Fig. 17 demonstrates the way in which area elements and content can be manipulated using the calculated density. The page generated using the default value of the calculated density is shown in the left middle of the frame. In the top row is shown a page generated by increasing the density above the calculated density, and the bottom row shows four pages generated by increasingly lower values of the density (from left to right).

The ratio of the minimal area and the display area is not the only factor that can affect the number of areas in the display. Changing the division parameters for the X and Y axis has a similar effect as seen in Fig. 11. Here the same display dimensions are used as above, and the minimal area size (Height=100 pixel, Width=100 pixel) is kept constant while changing the division ratio from small (X=Y=0.25 in curve c) to large (X=Y=0.45 in curve d).

The main difference between these two ways of manipulating the generated template is that in the first method the size of the largest area will always be the same. In addition, some of the other large areas will always be the same, depending on the actual numbers. This will happen, despite the change in the minimal area size. This is an important fact, because the two different templates that are generated according to these parameters resemble each other, but one looks less crowded than the other. Changes in the division ratio affect the size of the largest area, as well as the sizes of all other areas. Therefore the generated templates have very different looks, depending on the degree of change in this parameter.

In the logic layer at this point the algorithm uses the calculated density as a parameter and does not change the actual attributes that affect its value. At the moment the calculated density is used to determine whether an area will include a heading only, a heading and body text or a heading, a picture and body text. There is also an option to set the value of density manually, and thereby control the density within an information item. In addition, the algorithm uses the density as a threshold when automatically adjusting the font size.

There are at least two main controllable font sizes, one for the information item's title size and the other for the information item's body text size. The default method of emphasizing the title is that it is bigger than the body and appears in bold. To simplify the need for adjustment, it is required to set one value (body text size) and accordingly the other is set. When the generated template has a very high calculated density, i.e., there are many small areas in the entire display area, and there is a request for a very small font size, the algorithm changes the emphasizing method, displaying the title and the text in the same font, leaving the title in bold. An option is provided to override this action by setting the desired values for the title and the body text separately using the appropriate interface.

One of the features of the invention regarding personalization is that, in addition to providing a default edition, the user is allowed to have control over the amount of personalization. In the logic layer 400 is integrated a set of rules that deliver this capability. The LoP (Level of Personalization) represents different levels of personalization, varying from the system's default level to an explicit user personalized edition. The value of the LoP is used for calculating the weighted importance of an ontology category and affects the information item importance within that category.

It is assumed that there are a very large number of information items. The algorithm retrieves and handles only a portion of the total number of information items. This portion is evaluated by the following formula and is named *Items Pool*.

$$Items\ Pool = Cells_{(Number)}\ X\ Categories_{(Number)}$$

Cells variable stands for the number of cells generated by splits and merging in the first layer. Categories variable stands for the total number of categories available from the ontology in use. The number of items retrieved for each category is equal to the number of available cells. It is assumed that even in the initialization stage of the system the database will include enough items in each category.

Each information item is assigned an importance score according to the relevancy of the item to the user, according to the user profile, e.g. the user's areas of interest, and to previous items he has used. Feedback from other users on an item can have an effect, as well as its importance. The user profile is created both implicitly by tracking the information items the user consumes and explicitly by asking him to state his areas of interest. The possible values of the importance score can vary according to the information provider and can have high variability, e.g. extreme low and high values. Therefore a normalization process is performed on these values. For each category the items are sorted into 10 bins. A *bin gap* is calculated for each category separately according to the information item's importance in this category. The following formula is used for calculating the *Bin gap*:

$$Bin\,gap = \frac{Max_{(ImportanceVector)} - Min_{(ImportanceVector)}}{10}$$

In each category the items with the highest and lowest importance scores are allocated, $Max_{(Importance\ Vector)}$ and $Min_{(Importance\ Vector)}$ respectively. These values define the range to which all other items should be normalized.

The items are sorted into the bins. Inside the bins the items are sorted according to their original importance score in an ascending order. The bins are sorted in an ascending order as well, according to their order (1, 2, 3, ..., 10), where 1 is the most important bin and 10 is the least important bin. The aim of this process is to normalize the importance of information items across all categories. In addition, it allows the algorithm to correlate between the category importance score from the user profile and the item's importance score generated by a personalization system.

For each bin the algorithm calculates a weighted importance score, using the LoP factor to control the weight of personalization and default importance of an item. The following formula is used for that calculation:

Weighted Importance = (Level of Personalization) X (Importance from User

Profile) + (1-Level of Personalization) X (Bin Number)

All the bins from all the categories are sorted according to the weighted importance in an ascending order. Items within a bin with the same original importance score from the importance vector are sorted by publication date. When populating the template with information items, the algorithm retrieves information items from the sorted pool in a serial manner.

An additional feature regarding personalization is the existence of a special type of information items that can override personalization. This feature is included to prevent situations where, due to personalization, a user's edition will not include very important information items which do not fit his profile. These information items are grouped into one Meta-category termed 'Important information'. When populating the template, items from this category will be displayed first and therefore appear in the most significant areas in the template.

## **Example**

The following is an example of a demonstration version (demo) of the algorithm described herein that was developed and is presented to illustrate the main features of the invention. The example described herein below is only a very simplified, basic embodiment of the invention and is not meant to limit the invention in any manner. Once the principles of the invention are understood, skilled persons will be able to devise many alternate algorithms that can be used to put those principles into practice.

The algorithm was developed and tested on computers running the Microsoft XP operation system. It is written in C# using Microsoft Visual Studio.Net 2005 as the IDE. In order to run this demo, it is required that Microsoft .Net Framework Version 2.0 Redistributable package (x86) or higher is installed on the computer.

The following folders and files related to the demo have been prepared:
Folders:

- Algorithm-[*date*] - This folder includes all the demo sub folders and files. The date indicates the version number (e.g. 20070327 stand for a version created on 27/03/2007).
- Images (folder) - This folder includes pictures related to an item. In this demo each item must have only one picture.
  Files
- gui_images - This file includes pictures used in the demo graphic user interface.
- RecursiveWindows.exe - This file launches the demo.
- Content.xml - This file includes a sample of content.
- Themes.xml - This file includes predefined display themes.
- [*Item Id*].jpg - The pictures naming convention uses the item's id as the picture file name with the file extension .jpg.
- Log.text - This file aggregates the log of the algorithm execution. In each execution the information is appended at the end of the existing file. It is used mainly for development.

Structure of the Content XML File

In the final application the content is processed and stored in the system's backend and then broadcasted. In the demo, the Content XML file simulates content broadcasting or any other method of content delivery and the content storage. The content represented in this demo was retrieved from the content aggregator. Each category includes 30 items and each item has one picture.

- <Content>...</Content> - This is the root node, which holds the entire data.
- <Items>...</Items> - This node holds a collection of information items.
- <Item>...</Item> - This node represent an information item. It includes the following attributes:

  ○ Id - The unique identifier of an information item.
  ○ Importance - A number that represents the importance rank of the information item. The values can range from 1 to ∞, with 1 indicating the highest possible importance rank. For items with importance value 0 (zero) the personalization settings are overridden.
  ○ Category - Each information item belongs to one high level category in the ontology. This attributes represents the connection between an information item and a specific category.
  ○ Publication Date - Indicates the date and time in which the item arrived at the content server.
  In addition, the <Item> node includes the following sibling nodes:

- <Title>...</Title> - The information item heading.
- <Picture>...</Picture> - A relative pass to the picture which is related to the information item.
- <Body>...</Body> - The information item's body text.
Structure of Themes XML File

This file represents a predefined or saved collection of attributes which are related to the display. It can be addressed as themes, where each content provider has its own theme. By selecting a theme the user can read his personalized / standard edition of, e.g. his favorite print or web newspaper. In addition, looking at this option from a user centered approach, a theme can be regarded as a user 'profile'. The file contains mainly attributes from the 'Advanced Layout Settings' tab. The version of the file used in this demo does not include content related data, though it is very extensible. This file can contain multiple themes.

- <Themes>...</Themes> - Is the root node, which holds the entire data.
- <Setting>...</Settings> - This node holds a collection of themes items.
- <Set>...</Set> - This node represent a theme. It includes an extensible set of sibling nodes with the theme data. It includes the following attribute:

  ○ Id - A numeric theme identifier. In addition the <Set> node includes the following sibling nodes:

- <SetN ame>...</SetName> - A readable and meaningful name for the theme.
- <DisplayWidth>...</DisplayWidth> - A value of the display width in pixels.
- <DisplayHeight>...</DisplayHeight > - A value of the display height in pixels.
- <MinPanelWidth>...</MinPanelWidth> - The value of the minimal area width in pixels.
- <MinPanelHeight>...</MinPanelHeight> - The value of the minimal area Height in pixels.
- <Xratio>...</Xratio> - The value of the division parameter along the X axis.
- <Yratio>...</Yratio> - The value of the division parameter along the Y axis.
- <NonSplitIndex>...</NonSplitIndex> - The area number (0-3) that will not be spilt during the recursive splitting process.
- <NonSplitPolicy>...</NonSplitPolicy> - The policy in which the non splitting index is changing during the recursive splitting.
- <TextFontSize>...</TextFontSize> - The font size of the text in the article body (in points).
- <TitleFontSize>...</TitleFontSize> - The font size of the information items' headings.
- <Density>...</Density> - The value of the density factor used to set the structure within a information item.

## Implementing the Layout Algorithmic Approach

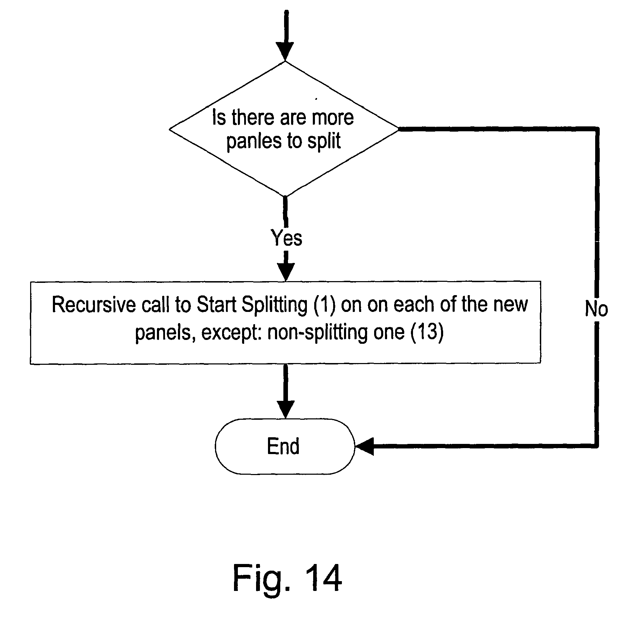

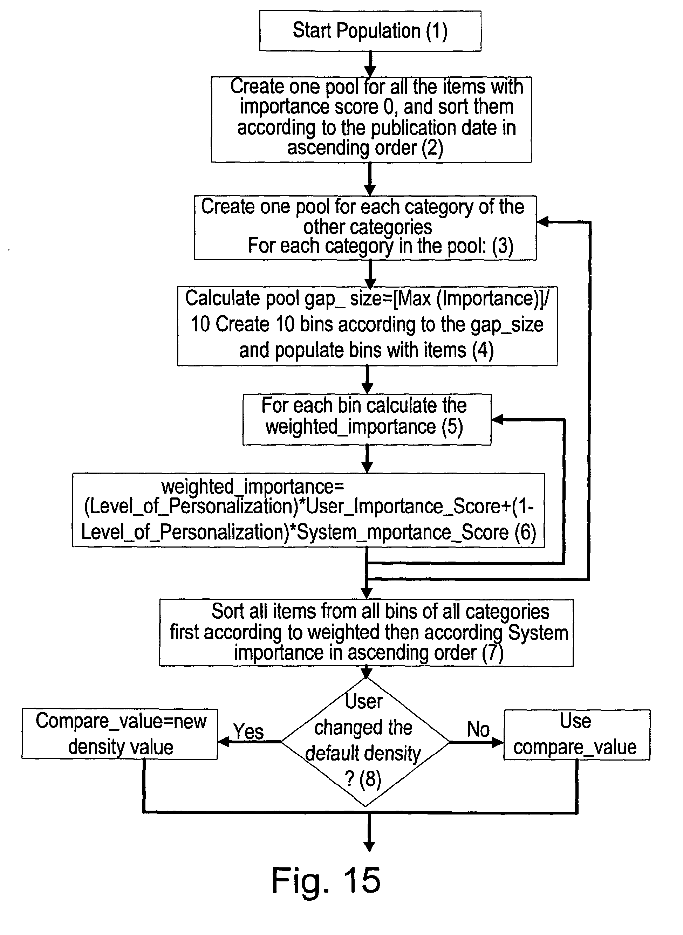

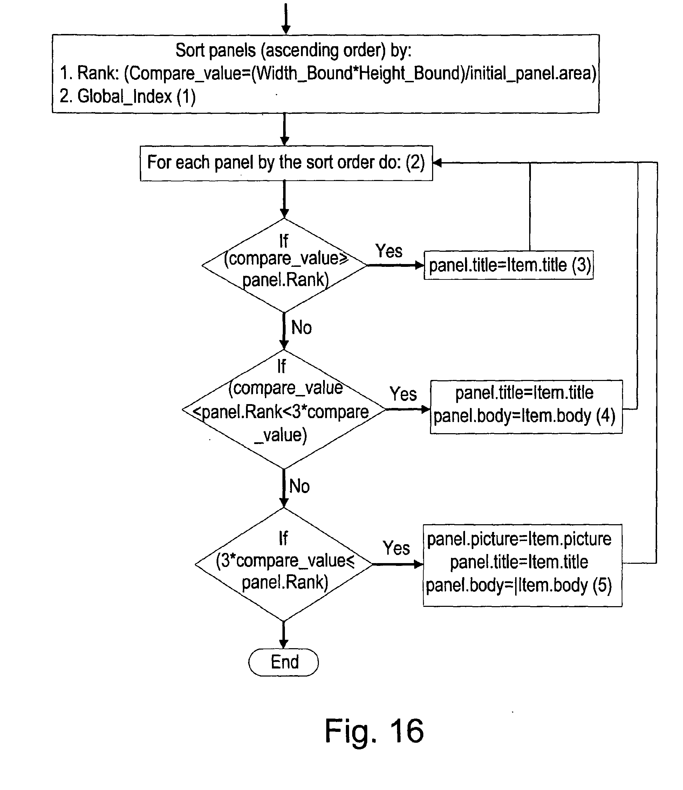

The splitting and merging processes that occur in the first and second layers of the algorithm are described in the flow charts Fig. 14 to Fig. 16. Each flow chart is a direct continuation of the chart preceding it. They have been separated not only for presentation reasons but also because each flow chart includes a coherent set of processes that perform a meaningful part of the algorithm's flow. Fig. 14 shows the initial actions in the splitting process, Fig. 15 shows the main action of splitting and merging, and Fig. 16 shows the recursive call and stopping condition in the splitting process. The main activities included in the flow charts are described in more detail in Table 1.

**Table 1: Description of the main activities seen in the flow charts (Fig. 14 to Fig. 16)**

| # | Description |
|---|---|
| 1 | Initiate the splitting algorithm. |
| 2 | This set of actions populates an array holding the relative importance ranks of each area (0 to 3). These values are used during the recursive importance calculation. Initial_panel.area = Height X Width Importance factor for the i$^{th}$ panel: Rank_array[i]= (area X $W_{Area}$)/$H_{Total}$ X $W_{Total}$ |
| 3 | This process performs a serial split to four sibling panels. Panel index is formatted in the following convention: parent_index.sub_panel_index (e.g. 1.1.2). For each panel the importance rank is calculated according to its location in the hierarchical structure of the template. |
| 4 | This is a loop for all new panels, it checks whether there is a need for merging. |
| 5 | This condition checks if the panel width (X axis) is smaller than the width of minimal panel (from settings). |
| 6 | Here we check if the current panel was merged before and if the near panel in the X axis was not merged as well. |
| 7 | This process performs the merge. The new panel width = current width + neighbor width. New panel height = the maximum between the current panel and the neighbor panel height. When done, it recalculates the importance rank. |
| 8 | The panel that was merged with the current panel is released, when creating one panel out of two. |
| 9 | This condition checks if the panel height (Y axis) is smaller than the height of minimal panel (from settings). |
| 10 | This condition checks if the current panel was merged before and if the near panel in Y axis was not merged as well. |
| 11 | This process performs the merge. The new panel height = current height + neighbor height. New panel Width = the maximum between the current panel and the neighbor panel width. When done, it recalculates the importance rank. |
| 12 | The panel that was merged with the current panel is released, when creating one panel out of two. |
| 13 | If there are more panels to split, call the splitting function (1). |

**Implementing Personalization in the Algorithmic Approach**

The first stage before populating the panels of the template with content is to prepare and process the content according to content and display personalization rules. Fig. 17 shows a flow chart presenting the main processes that perform personalization. These processes, which are parts of the personalization processes that occur in the logic layer as well as in the third layer, are guided by the logic layer rules, user profile and content attributes. This flow begins when the recursive templates generation processes end. The main processes seen in the flow chart of Fig. 17 are described in more detail in Table 2.

**Table 2: Description and explanation of the blocks in the personalization flow (Fig. 17)**

| # | Description |
|---|---|
| 1 | Start population process. |

(continued)

| # | Description |
|---|---|
| 2 | This process groups all items with importance score 0 to one meta category that represents information items that override personalization. |
| 3 | A loop that goes over the rest of the information items and arranges them into groups according to their category. |
| 4 | For each category the bin gap is calculated and 10 bins are created. Then the bins are populated with information items according to their importance scores. |
| 5 | This nested loop iterates over all the bins in a category. |
| 6 | For each bin in a category the weighted importance is calculated. |
| 7 | All information items are sorted into one pool, first according to the weighted importance of the bin and then according to the item importance. |
| 8 | Before populating, this condition checks if the density factor was changed manually. If it was changed, the new value will be used otherwise the calculated density value will be used. |

**Population and Information Item Construction**

Fig. 18 is a flow chart showing the main processes involved in populating the panels of the template with information items and how the internal structure of each panel is determined. This flow chart is a continuation of the previous flow chart. The processes involved in this phase are also guided by the logic layer rules, user profile and content attributes. This is an interaction between the logic layer and the third layer that involves display optimization, as well as some aspects of personalization (manual adjustment of density). The main processes seen in the flow chart in Fig. 18 are described in more detail in Table 3.

**Table 3: Description and explanation of the blocks in the template population flow (Fig. 18)**

| # | Description |
|---|---|
| 1 | This process sorts all panels according to their area size. Panels with the same area size are sorted again according to their position in the display, using their index (e.g., if panel 1.2.2 area = panel 2.2.2 area then panel 1.2.2 will be located before panel 2.2.2 in the panels queue, because the first panel is located higher than the second panel). |
| 2 | This loop constructs the content in the panel; it is executed for each panel in the display and populates it with the sorted content. First it calculates the ratio between an area and the entire display, this is the panel rank. |
| 3 | If the panel rank is smaller than the density factor, populate it with a title using the appropriate font size. |
| 4 | If the panel rank is bigger than the density factor but smaller than a threshold value that equals to three times the density value, populate it with a title and text using the appropriate font sizes. |
| 5 | If the panel is bigger than three times the density factor, populate the area with title, text and picture, using the appropriate font sizes. |

The example presented herein above shows that by integrating pre-defined rules with user preferences, content and device attributes the algorithm of the invention is able to successfully generate templates and populate them with content. The ability to create new templates by changing input parameters allows the algorithm to operate on different devices. Therefore the generated display can fit future display standards. In addition, by adjusting the input parameters it is possible to create different genres of the same template that will fit different displays, or to correlate between content and layout dynamically.

The structure of layers in the algorithm delivers high flexibility and extensibility, especially because of the fact that rules are stored in a separate logic layer. The ability to apply different styles of presentations on the same template has been shown in the example using themes. This is only one aspect of personalization. Additional aspects of personalization include implementation of user preferences that are collected using questionnaires. The algorithm provides the user with the ability to control the level of personalization. In order to avoid some of the personalization pit falls that would prevent important items from being displayed, the algorithm can identify cases where personalization should be overridden.

Although embodiments of the invention have been described by way of illustration, it will be understood that the invention may be carried out with many variations, modifications, and adaptations, without exceeding the scope of the claims.

## Claims

1. A method for automatically generating with a computer system dynamically changing, flexible, and individually customized layouts of information on a display area comprising a screen or a page without involvement of a human, said method guided by an extensive set of rules that represent the relationships between a limited set of input parameters related to properties of the devices making up said system, user preferences, and the content attributes of said information.

2. A method according to claim 1 comprising:

   a. providing to the computer system the limited set of input parameters; and
   b. providing to said computer system a layered structure of operating instructions comprised of three physical layers each of which provides a different functionality and one logic layer, which guides the execution of all layers, wherein:

   - the execution of said physical layers is synchronized sequentially, wherein the output of a higher physical layer provides the input to the one beneath it and said logic layer constantly provides the currently active physical layer with the required data and rules that represent the internal logic of content adaptation;
   - the first physical layer generates an empty template for content by recursively splitting the display area into smaller sibling areas according to said set of input parameters;
   - the second physical applies different merging strategies on areas within said generated template according to said set of input parameters that can include content attributes;
   - the third layer integrates the content into said generated template by negotiating between said template and said content, thereby optimizing the presentation of said content according to the number of items and their importance; and
   - said logic layer comprises the logic rules that represent relations between objects in the display and said set of input parameters;

   thereby enabling said computer system to perform content adaptation and display personalization by generating an infinite number of templates that can be adapted, according to said set of input parameters to any display dimensions and populating said templates with said content.

3. A method according to claim 2, wherein the stopping rule on which the recursive splits in the first layer operates is the minimal dimensions of an item or area in the target template.

4. A method according to claim 2, wherein the third layer correlates between a content item's importance according to the profile/preferences of the user and the perceived area of the area on the screen or page.

5. A method according to claim 2, wherein the logic rules of the logic layer comprise physical relations between the objects in the display as well as physical representations of abstract display concepts.

6. A method according to claim 2, wherein, using the two first layers, it is possible to generate a practically infinite number of templates by changing the input parameters.

7. A method according to claim 2, wherein, in the third layer, there is a process which determines the internal structure of each area in the template, according to the rules in the logic layer.

8. A method according to claim 1, wherein the limited set of input parameters comprises:

   - template parameters;
   - merging parameters; and
   - content parameters.

9. A method according to claim 2, wherein in the splitting method used in order to further divide the sibling areas after the initial split, one sibling area does not participate in the next iteration and the others do.

10. A method according to claim 2, wherein in the splitting method used in order to further divide the sibling areas after the initial split, only one sibling area participates in the next iteration and the others do not participate in any of the following iterations.

11. A method according to claim 2, wherein in the logic layer the calculated density is used to determine whether an area will include a heading only, a heading and body text or a heading, a picture and body text.

12. A method according to claim 2, wherein the logic layer comprises a set of rules that allow the user to have control over the amount of personalization of the display.

Fig. 1

Fig. 2

Fig. 3

Fig. 4

Fig. 5

Fig. 6

Fig. 7

# Fig. 8

# Fig. 9

Fig. 10

Fig. 11

Start Splitting  (1)

For Local _index : 0 to 3   Calculate importance factor for each screen area   (2)

Split panel to  4  sub panels  (serially ) and calculate the importance rank in the hierarchy  (3)

Fig. 12

Merging the panels: for each of the new panels, except non-splitting one (4)

If (current_panel. width< Width_Bound) (5)

Yes

If (current_panel was not merged) and (width_ neighbour_panel was not merged) (6)

No

No

If (current_panel. height< Height_Bound) (9)

Yes

Yes

Perform the merge. New panel width is the sun of current width and neighbor width. Height is the maximum height between the two panels. After the merge the importance rank is recalculated. (7)

No

No

If (current_panel was not merged) and (height_ neighbour_panel was not merged) (10)

Release width_ neighbour_panel (8)

a

Yes

Fig. 13

EP 2 068 251 A2

a

↓ Yes

Perform the merge. New panel height is the sum of current height and neighbor height. Width is the maximum height between the two panels. After the merge the importance rank is recalculated. (11)

Release height_ neighbour_panel (12)

# Fig. 13 (cont.)

Is there are more
panles to split

Yes

Recursive call to Start Splitting (1) on on each of the new
panels, except: non-splitting one (13)

No

End

Fig. 14

Start Population (1)

↓

Create one pool for all the items with importance score 0, and sort them according to the publication date in ascending order (2)

↓

Create one pool for each category of the other categories
For each category in the pool: (3)

↓

Calculate pool gap_ size=[Max (Importance)]/ 10 Create 10 bins according to the gap_size and populate bins with items (4)

↓

For each bin calculate the weighted_importance (5)

↓

weighted_importance= (Level_of_Personalization)*User_Importance_Score+(1- Level_of_Personalization)*System_mportance_Score (6)

↓

Sort all items from all bins of all categories first according to weighted then according System importance in ascending order (7)

↓

User changed the default density ? (8)

Yes → Compare_value=new density value

No → Use compare_value

# Fig. 15

Fig. 16

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5895477 A
- US 5956738 A
- WO 200302712 A
- WO 200302761 A

**Non-patent literature cited in the description**

- From Print to Web to e-paper - the challenge of designing the e-newspaper. **IHLSTRÖM, C. ; ÅKESSON, M. ; NORDQVIST, S.** Proceedings of ICCC 8th International Conference on Electronic Publishing. ELPUB, 2004, 249-260